(19) Europäisches Patentamt
European Patent Office
Office européen des brevets

(11) Veröffentlichungsnummer: **0 277 918 A2**

(12) **EUROPÄISCHE PATENTANMELDUNG**

(21) Anmeldenummer: **88810051.8**

(22) Anmeldetag: **01.02.88**

(51) Int. Cl.[4]: **C 08 G 77/04**
H 01 B 1/12

(30) Priorität: **05.02.87 CH 415/87**

(43) Veröffentlichungstag der Anmeldung:
**10.08.88 Patentblatt 88/32**

(84) Benannte Vertragsstaaten:
**CH DE FR GB IT LI NL**

(71) Anmelder: **CIBA-GEIGY AG**
**Klybeckstrasse 141**
**CH-4002 Basel (CH)**

(72) Erfinder: **Tieke, Bernd, Dr.**
**Route Bel-Air 22**
**CH-1723 Marly (CH)**

(54) **Carbazolhaltige Polysiloxane mit elektrischer Leitfähigkeit.**

(57) Die vorliegende Erfindung betrifft elektrisch leitfähige Polymere erhältlich durch anodische Oxidation von Ausgangspolymeren aus 5-100 Mol% an wiederkehrenden Struktureinheiten der Formel I und 95-0 Mol% an wiederkehrenden Struktureinheiten der Formel II

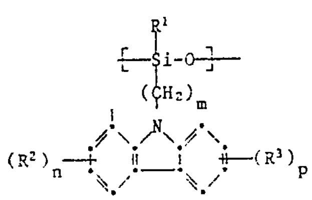 (I), 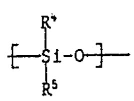 (II),

worin $R^1$ und $R^4$ unabhängig voneinander $C_1$-$C_4$-Alkyl, $C_1$-$C_4$-Alkoxy, Phenyl oder Phenoxy sind, $R^2$ und $R^3$ unabhängig voneinander $C_1$-$C_4$-Alkyl, $C_1$-$C_4$-Alkoxy, Halogen, Cyan oder Nitro bedeuten, $R^5$ $C_1$-$C_{18}$-Alkyl, das gegebenenfalls durch eine oder zwei Hydroxygruppen substituiert sein kann, Phenyl oder Hydroxyl ist,
m eine ganze Zahl von 3-11 ist und n und p unabhängig voneinander ganze Zahlen von 0 bis 2 sind.

Die elektrisch leitfähigen Polymeren sind im sichtbaren Bereich gefärbt, während die elektrisch isolierenden Ausgangspolymeren in diesem Bereich nicht gefärbt sind.

Die Produkte eignen sich vor allem als elektrochrome Anzeigeelemente, als positives Elektrodenmaterial oder als elektrisch leitende Folien.

EP 0 277 918 A2

**Beschreibung**

Carbazolhaltige Polysiloxane mit elektrischer Leitfähigkeit

Die vorliegende Erfindung betrifft elektrisch leitfähige Polymere, erhältlich aus carbazolhaltigen Polysiloxanen, Verfahren zur Herstellung besagter elektrisch leitfähiger Polymerer, ausgewählte Ausgangspolymere sowie die Verwendung der elektrisch leitfähigen Polymeren als elektrochrome Anzeigeelemente, als positive Elektrodenmaterialien oder als leitfähige Folien.

Die Herstellung von leitfähigen Polymeren durch anodische Oxidation von Ausgangspolymeren mit Carbazolseitengruppen ist bekannt. So beschreiben F.J. Davis et al. in J. Chem. Soc., Chem. Comm., 1984, 890-892 die elektrochemische Oxidation von Poly-(N-vinylcarbazol)-Filmen.

Carbazolhaltige Polysiloxane (Homopolymere) werden von P. Strohriegl in Makromol. Chem., Rapid Commun., 7, 771 (1986) beschrieben. Die Ueberführung dieser Polymeren in elektrisch leitfähige Materialien ist nicht erwähnt.

Leitfähige Polymere auf Polysiloxanbasis sind bislang nicht bekannt geworden. Solche Materialien sind aus mehreren Gründen von potentiellem Interesse; das Ausgangsmaterial ist relativ einfach herstellbar und besitzt eine gute Flexibilität und gute filmbildende Eigenschaften.

Es wurde jetzt gefunden, dass sich Polysiloxane mit Carbazolseitengruppen elektrochemisch oxidieren lassen und dass dabei elektrisch leitfähige Polymere entstehen.

Die vorliegende Erfindung betrifft elektrisch leitfähige Polymere erhältlich durch anodische Oxidation von Ausgangspolymeren aus 5-100 Mol% an wiederkehrenden Struktureinheiten der Formel I und 95-0 Mol% an wiederkehrenden Struktureinheiten der Formel II

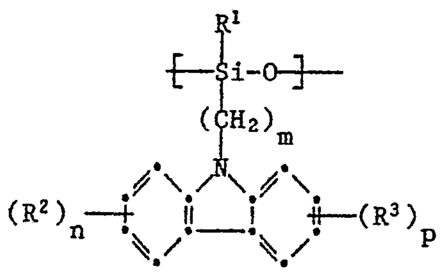 (I), 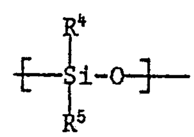 (II),

worin $R^1$ und $R^4$ unabhängig voneinander $C_1$-$C_4$-Alkyl, $C_1$-$C_4$-Alkoxy, Phenyl oder Phenoxy sind, $R^2$ und $R^3$ unabhängig voneinander $C_1$-$C_4$-Alkyl, $C_1$-$C_4$-Alkoxy, Halogen, Cyan oder Nitro bedeuten, $R^5$ $C_1$-$C_{18}$-Alkyl, das gegebenenfalls durch eine oder zwei Hydroxygruppen substituiert sein kann, Phenyl oder Hydroxyl ist, m eine ganze Zahl von 3-11 ist und n und p unabhängig voneinander ganze Zahlen von 0 bis 2 sind.

Bedeuten irgendwelche Substituenten $C_1$-$C_4$-Alkyl, so handelt es sich dabei um verzweigte oder insbesondere um geradkettige Reste. Beispiele dafür sind Methyl, Ethyl, n-Propyl, Isopropyl, n-Butyl oder sek.-Butyl. Bevorzugt werden Methyl, Ethyl, n-Propyl und n-Butyl, insbesondere Methyl und Ethyl und ganz besonders Methyl. Bedeuten irgendwelche Substitutenten $C_1$-$C_4$-Alkoxy, so handelt es sich dabei um verzweigte oder insbesondere um geradkettige Reste. Beispiele dafür sind Methoxy, Ethoxy, n-Propyloxy, Isopropyloxy, n-Butyloxy oder sek.-Butyloxy. Bevorzugt werden Methoxy, Ethoxy, n-Propyloxy oder n-Butyloxy, insbesondere Methoxy oder Ethoxy und ganz besonders Methoxy.

$R^5$ besitzt als $C_1$-$C_{18}$-Alkyl beispielsweise eine der oben für $C_1$-$C_4$-Alkyl definierten Bedeutungen oder kann zusätzlich beispielsweise n-Pentyl, n-Hexyl, n-Heptyl, n-Octyl, n-Nonyl, n-Decyl, n-Undecyl, n-Dodecyl, n-Tetradecyl, n-Hexadecyl oder n-Octadecyl sein.

$R^5$ ist vorzugsweise $C_1$-$C_4$-Alkyl und insbesondere Methyl.

Als Halogen können $R^2$ und $R^3$ Fluor, Chlor, Brom oder Iod sein. Bevorzugt werden Chlor Brom oder Iod und ganz besonders Brom oder Iod.

Bedeutet $R^5$ $C_1$-$C_{12}$-Alkyl, das durch ein oder zwei Hydroxylgruppen substituiert ist, so befinden sich die Hydroxylgruppen an unterschiedlichen Kohlenstoffatomen, vorzugsweise an benachbarten Kohlenstoffatomen oder am ω-Kohlenstoffatom. Beispiele für bevorzugte Reste sind 2-Hydroxyethyl, 3-Hydroxypropyl oder 2,3-Dihydroxypropyl.

Der Index m bezeichnet die Länge der Alkylenkette zwischen dem Siloxangerüst und dem Carbazolchromophor. Dieser Index ist vorzugsweise eine ganze Zahl von 3-6 und ganz besonders bevorzugt 3.

Die Indizes n und p bezeichnen die Zahl der Substituenten am Carbazolchromophor. Vorzugsweise besitzen diese Indizes die gleichen Werte, obwohl sie auch unterschiedlich sein können. Diese Indizes sind bevorzugt 0 oder 1, ganz besonders bevorzugt jedoch 0.

Bevorzugte elektrisch leitfähige Polymere leiten sich von Ausgangspolymeren ab, die im wesentlichen aus wiederkehrenden Struktureinheiten der Formel I bestehen.

Besonders bevorzugt werden elektrisch leitfähige Polymere, die sich von Ausgangscopolymeren enthaltend 10-95 Mol%, insbesondere 50-85 Mol%, an wiederkehrenden Struktureinheiten der Formel I und und 90-5 Mol%, insbesondere 50-15 Mol%, an wiederkehrenden Struktureinheiten der Formel II ableiten.

Ganz besonders bevorzugt werden elektrisch leitfähige Polymere, worin $R^1$ und $R^4$ unabhängig

voneinander Methyl oder Phenyl sind, $R^5$ Methyl, Ethyl oder Hydroxyl bedeutet, m eine ganze Zahl von 3-6 ist und n und p 0 sind.

Ferner werden elektrisch leitfähige Polymere bevorzugt, die sich von Augangscopolymeren, wie oben definiert, ableiten, und worin $R^1$ und $R^4$ Methyl sind, $R^5$ Hydroxyl oder Methyl bedeutet, m 3 ist und n und p 0 sind.

Bei den Ausgangscopolymeren lassen sich Art und Menge der verwendeten comonomeren Siloxanstrukturelemente der Formel II variieren; dabei können auch verschiedene Strukturelemente der Formeln I und/oder II gleichzeitig in ein Ausgangscopolymeres eingebaut sein. Damit ist es möglich, bei vorgegebenem Strukturelement der Formel I Ausgangsmaterialien mit gewünschten mechanischen oder thermischen Eigenschaften, beispielsweise mit einer bestimmten Flexibilität oder Glasübergangstemperatur, bereitzustellen.

Diese Copolymeren sind neu und ebenfalls ein Gegenstand der vorliegenden Erfindung. Bei den Ausgangscopolymeren kann es sich um sogenannte statistische Copolymere oder um Blockcopolymere handeln.

Das Molekulargewicht der verwendeten Ausgangshomo- oder -copolymeren kann in weiten Bereichen variieren und liegt beispielsweise zwischen 1'000 und 1'000'000 (Zahlenmittel).

Die struktur des elektrisch lefitähigen Polymeren ist nicht mit Sicherheit bekannt. Wahrscheinlich bildet sich in Analogie zur Oxidation von Poly-(N-vinylcarbazol) ein über die Carbazolgruppen vernetztes kationisches Produkt, in das die Anionen des Leitsalzes eingebaut sind und das gegebenenfalls mit dem Lösungsmittel reagiert. Diese Reaktionen sind am Beispiel eines homopolymeren Ausgangsmaterials im Folgenden Schema skizziert. Bei den copolymeren Ausgangsmaterialien dürften analoge Vernetzungen ablaufen (vergl. den oben erwähnten Artikel von F.J. Davis et al.).

Schema (Oxidation von homopolymeren carbazolhaltigen Polysiloxanen):

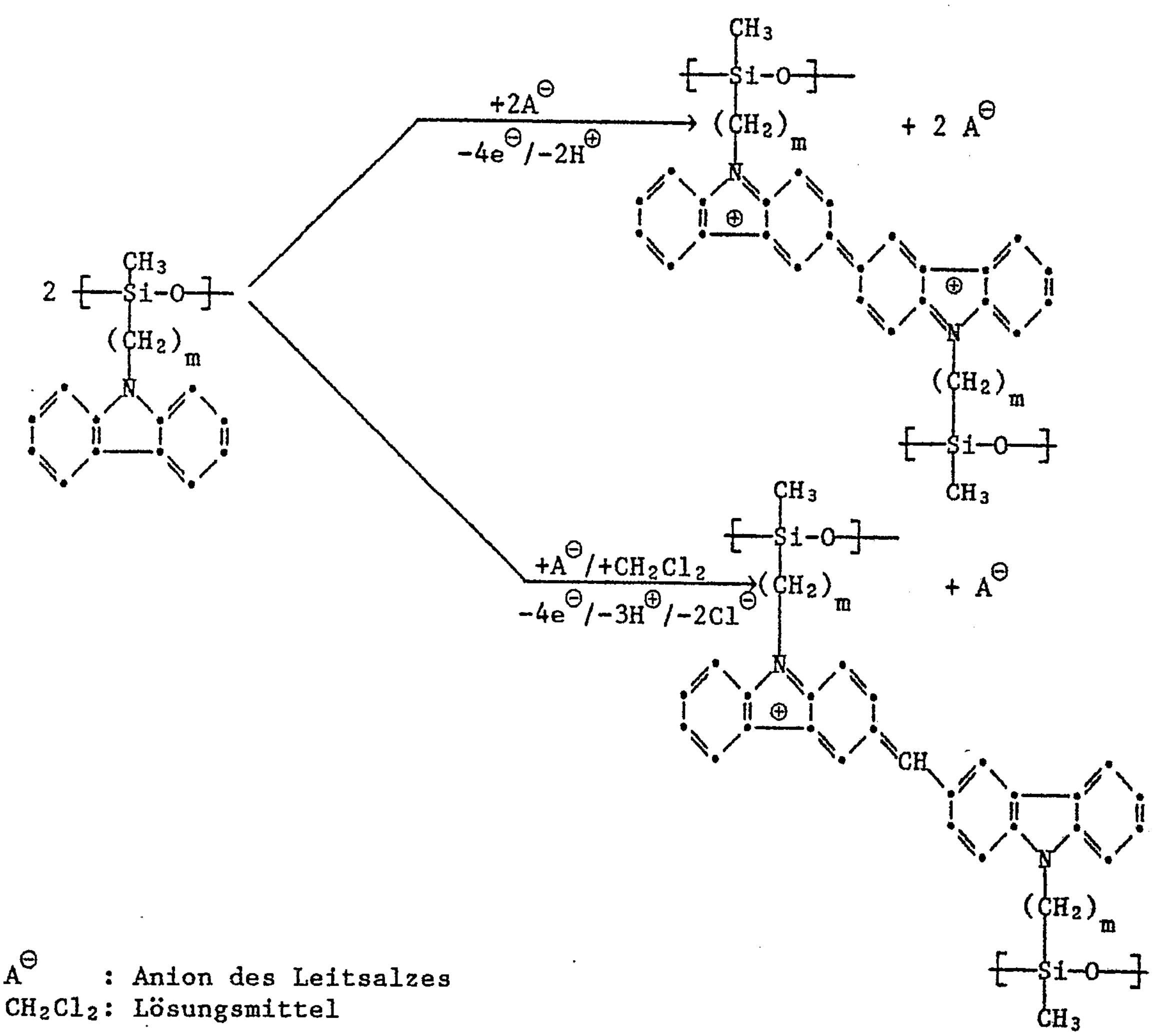


$A^{\ominus}$ : Anion des Leitsalzes
$CH_2Cl_2$: Lösungsmittel

Die elektrisch leitfähigen Polymeren dieser Erfindung lassen sich durch anodische Oxidation der

Ausgangspolymeren enthaltend die Strukturelemente der Formel I und gegebenenfalls der Formel II erhalten.

Ueber Spacergruppen mit einem Polymergerüst verbundene Carbazolgruppen wurden bislang nicht elektrochemisch oxidiert.

Folgende Herstellungsverfahren werden zweckmässig gewählt:

A) Man löst ein Ausgangspolymeres oder eine Mischung verschiedener Ausgangspolymerer in einem Elektrolyten enthaltend ein gelöstes Leitsalz und scheidet das leitfähige Polymere anschliessend anodisch ab oder

B) man beschichtet eine Elektrode mit einem Film aus einem Ausgangspolymeren oder einer Mischung von Ausgangspolymeren und oxidiert besagte Schicht anodisch in einer Elektrolytlösung enthaltend ein gelöstes Leitsalz.

Die Erfindung betrifft auch die Herstellungsverfahren A) und B), wie oben definiert. Die Anionen des Leitsalzes werden teilweise in das oxidierte Produkt eingebaut. Das Leitsalz wird vorzugsweise in Form der jeweiligen Protonensäure oder eines ihrer Salze, bevorzugt der Tetraalkylammoniumsalze, dem Elektrolyten zugesetzt. Bevorzugte Anionen werden ausgewählt aus der Gruppe bestehend aus $BF_4^-$, $PF_6^-$, $AsF_6^-$, $SbF_6^-$, $SbF_5(OH)^-$, $SbCl_6^-$, $ClO_4^-$, $HSO_4^-$, $SO_4^{2-}$, $CF_3SO_3^-$, $CH_3C_6H_4SO_3^-$, $CF_3COO^-$, $HC_2O_4^-$ oder $[Fe(CN)_6]^{3-}$, Alklysulfat, Alkylsulfonat, Alkylphosphat oder Alkylphosphonat sowie Kombinationen dieser Anionen. Besonders bevorzugte Anionen sind $PF_6^-$ und ganz besonders ClO .

Die Elektrolyse wird vorzugsweise in polaren organischen Lösungsmitteln, die die Ausgangspolymeren und das Leitsalz lösen (Verfahren A) oder die das Leitsalz lösen und den Film des Ausgangspolymeren auf der Elektrode nicht lösen (Verfahren B), durchgeführt. Zu diesen organischen Lösungsmitteln zählen beispielsweise Alkohole, wie Hexanol, organische Carbonate, wie Propylencarbonat, Ether, wie 1,2-Dimethoxyethan, Diethylenglykoldimethylether, Cellosolve®, Dioxan, THF oder Methyl-THF, Nitrile, wie Acetonitril oder Benzo nitril oder Nitrobenzol, Nitromethan, N-Methylpyrrolidon, Methylenchlorid, Dimethylsulfoxid, Dimethylformamid, Dimethylacetamid oder Aceton. Das Elektrolysierbad kann darüber hinaus noch andere Bestandteile enthalten, wie z.B. Wasser, Netzmittel oder Emulgatoren.

Bei Verfahren A) muss die Menge an Ausgangspolymeren und gegebenenfalls an Cokomponente, die in der Elektrolytlösung vorhanden ist, ausreichend sein, um eine vernünftige Umsetzungsgeschwindigkeit zu gewährleisten. In der Regel sind Konzentrationen von mehr als $10^{-3}$ Mol pro Liter nötig. Als obere Grenze der Konzentration des Ausgangspolymeren ist dessen Sättigungskonzentration im jeweiligen Elektrolyten anzusehen.

Die Leitsalzkonzentration beträgt vorzugsweise 0,001 bis 1 Mol pro Liter. Es kann auch hier eine Konzentration bis zur Sättigung des Elektrolyten verwendet werden.

Als Elektrodenmaterialien kommen alle gängigen elektrisch leitfähigen Stoffe in Frage. Dazu zählen beispielsweise Metalle, wie Kupfer, Aluminium, Nickel, Stahl oder insbesondere Platin.

Man kann aber auch Graphit, mit leitfähigem Material beschichtetes Glas, wie Indium-Zinnoxid (ITO) beschichtetes Glas, oder leitfähige Polymere, beispielsweise durch anodische Oxidation gebildetes Polypyrrol, verwenden.

Die Form der Elektroden ist beliebig. Es können plattenförmige Elektroden in paralleler Anordnung verwendet werden oder aber zylinderförmige Elektroden, die gegebenenfalls um die Längsachse rotiert werden können.

Die Beschichtung der Elektrode im Verfahren B) erfolgt in der dem Fachmann bekannten Weise, beispielsweise durch Tauchen, Aufschleudern, Rakelbeschichtung, Vorhanggiessverfahren, Aufpinseln, Sprühen oder Reverse-Roll Beschichtung.

Die Dicke der auf der Elektrode aufzubringenden Schicht (Verfahren B) des Ausgangspolymeren beträgt in der Regel nicht mehr als 50 µm, vorzugsweise weniger als 10 µm.

Die Elektrolyselösung kann während der Elektropolymerisation der Monomeren bewegt werden. Die Bewegung kann in irgendeiner der üblichen Arten erreicht werden, beispielsweise durch starkes Rühren mit Flügelrührern, Magnetrührern, Ultraschall, Vibration oder durch Hindurchleiten von Gasen durch den Elektrolyten (einschliesslich der an der Kathode erzeugten Gase). Das Rühren kann aber auch durch Bewegung der Elektroden erfolgen.

Zur Elektropolymerisation wird an die Elektroden eine Spannung angelegt. Diese Spannung wird so gewählt, dass sie ausreicht, um die Reaktion durchzuführen. Dabei kann es sich um eine Gleichspannung oder eine Wechselspannung handeln, der ein Gleichspannungsanteil überlagert ist. Bevorzugt verwendet man Gleichspannungen.

Die Spannung zwischen den Elektroden soll ausreichen, um die Ausgangspolymeren zu oxidieren, ohne wesentliche Aenderungen im Bad zu erzeugen, beispielsweise durch Abbau von Bestandteilen des Bades. In der Regel verwendet man Spannungen von 2-12 V, insbesondere 5-9 V.

Im allgemeinen werden Stromdichten von bis zu 1 A/cm² verwendet, vorzugsweise jedoch Stromdichten von weniger als 500 mA/cm² und ganz besonders bevorzugt Stromdichten von weniger als 50 mA/cm².

Die Elektrolyse kann auch unter Inertgas durchgeführt werden; ebenso kann man an der Luft elektrolysieren.

Während der Elektrolyse wird zweckmässig eine Temperatur des Elektrolyten zwischen -20° und +30°C eingehalten. Es können aber auch davon abweichende Temperaturen vorkommen. Die Temperaturgrenzen richten sich in erster Linie nach der Elektrolytlösung (Erstarrungs-bzw. Verdampfungspunkt). Vorzugsweise elektrolysiert man bei Raumtemperatur.

Die entstehenden Produkte sind im Gegensatz zu den Ausgangspolymeren elektrisch leitfähig und im sichtbaren Bereich intensiv gefärbt. Das gefärbte Produkt ist je nach Reaktionsdauer mehr oder weniger vernetzt und somit in den üblichen organischen Lösungsmitteln unlöslich oder gegebenenfalls quellbar.

Ueberraschenderweise bleibt die Flexibilität der Ausgangspolymeren in den vernetzten Produkten erhalten, so dass sich diese Produkte zur Herstellung von elektrisch leitfähigen Ueberzügen oder Folien eignen.

Die elektrische Leitfähigkeit des Endproduktes lässt sich durch die Vernetzungsdichte variieren. Man kann bei Verfahren B) über die Elektrolysedauer eine bestimmte Leitfähigkeit einstellen. Typische Werte der elektrischen Leitfähigkeit der Endprodukte liegen im Bereich von $10^{-10}$ - $10^{-3}$ ($S \cdot cm^{-1}$ ).

Die Redoxreaktion ist zumindest teilweise reversibel und man kann durch Umpolen eine Entfärbung des Polymeren erzielen. Dieser Vorgang ist wiederholbar, so dass solche Polymere als elektrochrome Anzeigeelemente eingesetzt werden können.

Die Ausgangspolymeren enthaltend die Strukturelemente der Formel I und gegebenenfalls der Formel II sind teilweise bekannt (Homopolymere) oder können in Analogie zu diesen Verbindungen hergestellt werden.

Dabei setzt man Poly-(hydrosiloxane) mit Carbazolderivaten enthaltend N-Alkenylgruppen mit endständiger Doppelbindung nach folgendem Schema um (vergle. auch den oben erwähnten Artikel von P. Strohriegl):

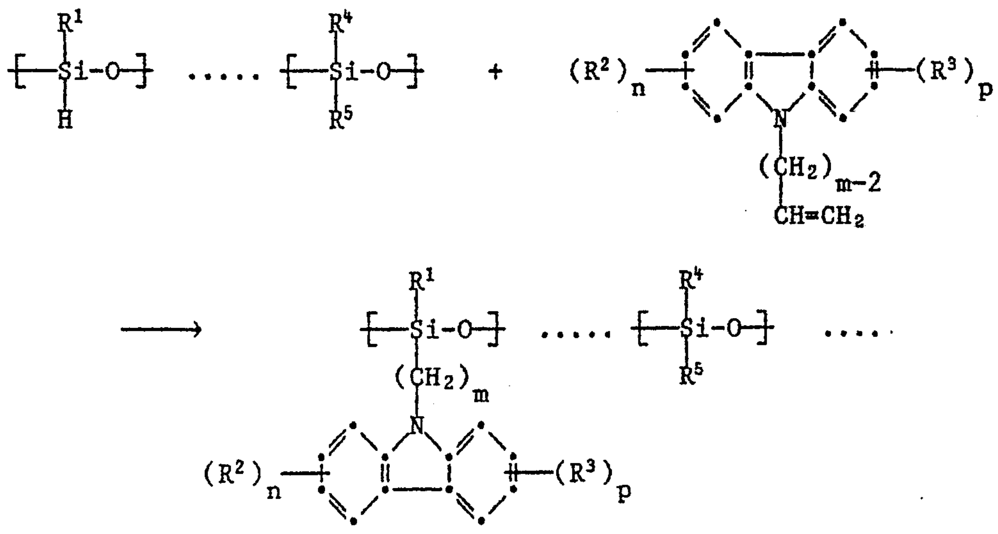

Diese Umsetzung wird durch Pt-Komplexe, beispielsweise durch $H_2PtCl_6 \cdot 6H_2O$ oder $(C_5H_5)_2PtCl_2$, katalysiert.

Die Poly-(hydrosiloxane) sind teilweise im Handel erhältlich oder können in Analogie zu bekannten Methoden, beispielsweise durch Hydrolyse von Dichlorsilanen, erhalten werden.

Die Carbazolderivate enthaltend N-Alkenylgruppen mit endständigen Doppelbindungen können beispielsweise durch Umsetzung von Na-Carbazol(derivaten) und 1-Alkenyl-ω-halogeniden erhalten werden.

Die elektrisch leitfähigen Polymeren lassen sich vielseitig verwenden, beispielsweise als elektrochrome Anzeigen, als positives Elektrodenmaterial (z.B. für Sekundär-Lithium Batterien) oder als leitenden Folien, beispielsweise für EMI-Shielding oder für Antistatikausrüstung.

Die Erfindung betrifft daher auch die Verwendung der elektrisch leitfähigen Polymeren für diese Zwecke.

Die folgenden Beispiele erläutern die Erfindung näher.

Beispiel 1: Herstellung von N-Allylcarbazol

83,6 g (0,5 Mol) Carbazol werden in 250 ml trockenem DMF gelöst. Diese Lösung wird bei 0°C zu einer Suspension von 12,0 g (0,4 Mol) Natriumhydrid in 500 ml DMF getropft. NaH wird als 80%ige Oelsuspension eingesetzt. Nach weiteren 2 Stunden Rühren bei 0°C werden 38 ml (0,45 Mol) Allylbromid zugetropft. Nach beendeter Zugabe wird die Mischung innerhalb einer Stunde unter Rühren auf Raumtemperatur aufgewärmt. Zur Zersetzung von restlichem NaH werden noch 100 ml Methanol zugesetzt. Anschliessend wird das Lösungsmittelgemisch im Vakuum abrotiert und der Rückstand mit 400 ml Petrolether (40-60°C) extrahiert. Der Petroletherauszug wird schliesslich filtriert und einrotiert. Das zurückbleibende bräunliche Oel wird im Hochvakuum destilliert. Es werden 65,1 g eines blassgelben, mikrokristallinen Feststoffs erhalten. Schmelzpunkt: 52-54°C, Siedepunkt: 112°C bei 13 Pa. Ausbeute 78,5 % d.Th.,

Elementaranalyse:

Berechnet für $C_{15}H_{13}N$:

86,92 % C, 6,32 % H, 6,76 % N,

Gefunden:

86,81 % C, 6,39 % H, 6,62 % N.

Beispiel 2: Herstellung von carbazolhaltigem Polysiloxan aus N-Allylcarbazol und Polymethylhydrosiloxan

12,03 g (0,2 Mol) Polymethylhydrosiloxan (Petrarch PS 122, M.W. 4.5-5x10$^3$) und 48,0 g (0,22 Mol) N-Allylcarbazol werden unter Stickstoff in 200 ml trockenem THF gelöst. Zu dieser Mischung werden unter Stickstoff 20 ml einer Katalysatorlösung aus $H_2PtCl_6 \bullet 6H_2O$ in THF (Konzentration: 4x10$^{-3}$ mol/l) zugegeben. Die Mischung wird eine Woche bei 60°C gerührt, wobei sich die Umsetzung IR-spektroskopisch an der Abnahme der Si-H-Bande bei 2080 cm$^{-1}$ verfolgen lässt.

Das Polymere wird in Methanol ausgefällt und mehrmals durch Lösung in Dichlormethan und Wiederausfällen in Methanol gereinigt. Schliesslich werden 32,5 g eines farblosen, leicht grauen Pulvers erhalten. Das Polymere besitzt eine Tg von 50°C und eine Viskositätszahl [η] = 0,058 (gemessen in Toluol bei 30°C). Nach den Ergebnissen der Elementaranalyse ist Allylcarbazol an 2/3 der Si-H-Gruppe addiert worden und das restliche Drittel ist zu Si-OH hydrolysiert worden.

Gefunden:
64,38 % C, 6,30 % H, 4,55 % N, 13,58 % Si;
Berechnet für $(2C_{16}H_{17}NOSi \bullet CH_4O_2Si)_n$:
64,88 % C, 6,27 % H, 4,59 % N, 13,79 % Si).

Das Polymere ist gut löslich in THF, Benzol, Toluol und chlorierten Kohlenwasserstoffen, wie z.B. Dichlormethan.

Beispiel 3: Herstellung von carbazolhaltigem Polysiloxan aus N-Allylcarbazol und Polymethylhydrosiloxan

3,01 g (0,05 Mol) Polymethylhydrosiloxan (Petrarch PS 122, MW 4,5-5x10$^3$) und 11,4 g (0,055 Mol) N-Allylcarbazol werden in 100 ml trockenem Toluol unter Stickstoff gelöst. Zu dieser Mischung werden 4 mg (10$^{-5}$ Mol) Dichlordicyclopentadienplatin zugegeben. Die Mischung wird nun 48 h bei 60°C gerührt, wobei sich die Umsetzung IR-spektroskopisch an der Abnahme der Si-H-Bande bei 2080 cm$^{-1}$ verfolgen lässt.

Anschliessend wird das Polymere in 1 l n-Hexan ausgefällt und durch Lösen in THF und Wiederausfällen in n-Hexan gereinigt. Das Produkt wird bei 20°C im Vakuum getrocknet. Es werden 11,25 g eines weissen Pulvers erhalten. Das Polymere besitzt eine Glastemperatur von 49°C und eine Viskositätszahl [η] = 0,111 (gemessen in THF bei 30°C). Nach der Elementaranalyse ist Allylcarbazol an 88 % aller Si-H-Gruppen addiert worden und die restlichen SiH-Gruppen sind zu SiOH-Gruppen oxydiert worden.

Gefunden:
70,31 % C, 6,58 % H, 4,82 % N, 11,06 % Si;
Berechnet für $(8C_{16}H_{17}NOSi \bullet CH_4O_2Si)$:
69,97 % C, 6,37 % H, 5,06 % N, 11,40 % Si.

Beispiel 4: Herstellung von carbazolhaltigem Polysiloxan aus N-Allylcarbazol und (50 %) Methylhydro-(50 %)dimethylsiloxan-Copolymer

13,43 g (0,1 Mol) eines (50 %) Methylhydro-(50 %)dimethylsiloxan-Copolymeren (Petrarch PS 122,5, M.W. 900-1000) und 24,0 g (0,11 Mol) N-Allylcarbazol werden unter Stickstoff in 150 ml trockenem THF gelöst. Zu dieser Mischung werden noch 21 mg $H_2PtCl_6.6H_2O$ als Katalysator hinzugegeben. Dann wird die Mischung ca. 1 Woche am Rückfluss gekocht. Nach dieser Zeit ist die Reaktion vollständig. Dies lässt sich IR-spektroskopisch am Verschwinden der Si-H-Bande bei 2080 cm$^{-1}$ nachweisen.

Das Polymere wird in Methanol ausgefällt und mehrmals durch Lösen in Dichlormethan und Wiederausfällen in Methanol gereinigt. Schliesslich werden 26,3 g einer leicht bräunlichen, zähen Substanz erhalten, die bei Eiskühlung glasig erstarrt. Das Polymere besitzt einen Tg von 14°C und eine Viskositätszahl [η] = 0,031 (gemessen in THF bei 30°C),

Elementaranalyse:
Gefunden:
63,58 % C, 6,85 % H, 4,01 % N, 16,00 % Si;
Berechnet für $(C_{16}H_{17}NSiO \bullet C_2H_6SiO)_n$:
63,30 % C, 6,79 % H, 4,10 % N, 16,45 % Si).

Beispiel 5: Herstellung von carbazolhaltigem Polysiloxan aus N-Allylcarbazol und (15 %) Methylhydro-(85 %)dimethylsiloxan-Copolymer

21,11 g (0,05 Mol) eines (15 %) Methylhydro-(85 %)dimethylsiloxan-Copolymeren (Petrarch PS 123.5, M.W. 2000-2500) und 11,4 g (0,052 Mol) N-Allylcarbazol werden unter Stickstoff in 50 ml trockenem THF gelöst. Zu dieser Mischung werden noch 13 mg $H_2PtCl_6 \bullet 6H_2O$ als Katalysator hinzugegeben. Dann wird die Mischung 12 h bei 50°C gerührt. Nach dieser Zeit ist die Reaktion vollständig, wie sich IR-spektroskopisch am Verschwinden der Si-H Bande bei 2080 cm$^{-1}$ nachweisen lässt.

Das Lösungsmittel wird abdestilliert und der Rückstand zweimal mit 100 ml Methanol geschüttelt. Dann wird der Rückstand abgetrennt, in 100 ml Methylenchlorid gelöst und mit $CaCl_2$ getrocknet. Nach dem Filtrieren wird das Methylenchlorid abdestilliert und der Rückstand bei 50°C im Vakuum getrocknet. Es werden 17,1 g einer trüben, hochviskosen Flüssigkeit erhalten, die beim Kühlen mit Trockeneis glasig erstarrt. Das Polymere besitzt einen Tg von -45°C und eine Viskositätszahl [η] = 0,055 (gemessen in THF bei 30°C).

Elementaranalyse:
Gefunden:
45,45 % C, 7,68 % H, 1,60 % N, 28,93 % Si;

Berechnet für (1,5 $C_{16}H_{17}NSiO$•8,5 $C_2H_6SiO)_n$:
47,74 % C, 7.48 % H, 2.04 % N, 27,23 % Si).

Beispiel 6: Herstellung von carbazolhaltigem Polysiloxan aus N-Allylcarbazol und (50 %) Methylhydro-(50 %)methyl-n-octylsiloxan-Copolymer

8.75 g (0,05 Mol) eines (50 %) Methylhydro-(50 %)methyl-n-octylsiloxan-Copolymeren (Petrarch PS 125, MW 400-600) und 11,4 g (0,052 Mol) N-Allylcarbazol werden unter Stickstoff in 100 ml trockenem Toluol gelöst. Zu dieser Mischung werden 2 mg Dichlordicyclopentadienplatin als Katalysator zugegeben. Dann wird die Mischung 30 h bei 60° C gerührt. Nach dieser Zeit ist die Reaktion vollständig, wie sich IR-spektroskopisch am Verschwinden der SiH-Bande bei 2080 $cm^{-1}$ nachweisen lässt.

Da Polymere wird in 800 ml Methanol ausgefällt und durch Lösen in 50 ml THF und Wiederausfällen in 1 l Methanol gereinigt. Das Produkt wird bei 50° C im Vakuum getrocknet. Es werden 13,6 g einer hochviskosen Masse, die beim Kühlen mit Trockeneis glasig erstarrt, erhalten. Das Polymere besitzt eine Glastemperatur von -20° C und eine Viskositätszahl [η] = 0,167 (gemessen in THF bei 30° C).
Elementaranalyse:
Gefunden:
64,42 % C, 8,60 % H, 2,89 % N, 13,32 % Si
Berechnet für ($C_{16}H_{17}NOSi$•$C_9H_{20}OSi$):
68,28 % C , 8,48 % H, 3,19 % N, 12,79 % Si.

Beispiele 7-13: Herstellung elektrisch leitfähiger Polymerer durch anodische Oxidation der Polysiloxane aus Beispielen 2-6.

0,01 Mol Polymeres aus Beispiel 2-6 und 0,02 Mol Elektrolytsalz (s. Tab 1) werden in 200 ml trockenem Methylenchlorid gelöst und 30 min. mit Argon gespült. In die Lösung werden zwei Platinelektroden (50x20x1 mm) eingetaucht. Beim Einschalten des Stromes (Stromdichte 1mA/$cm^2$) bildet sich auf der Anode ein blaugrüner Niederschlag. Es wird eine Stunde elektrolysiert.

Nach dieser Zeit hat sich ein Film gebildet, der anschliessend durch zweimaliges 30 minütiges Spülen mit Methylenchlorid gereinigt und 12 h im Hochvakuum getrocknet wird.

Das erhaltene filmförmige Material ist unschmelzbar und unlöslich in den herkömmlichen organischen Lösungsmitteln. Weitere Daten bezügl. Herstellungsbedingungen und spezifische Leitfähigkeiten s. Tab. 1.

Tabelle 1: Herstellungsbedingungen und spezifische Leitfähigkeiten der anodisch oxidierten Polysiloxanfilme

| Beispiel Nr. | Polymer aus Beispiel | Leitsalz | Spannung [V] | Stromdichte [mA / cm²] | Ausbeute [mg] | σ [S cm$^{-1}$] |
|---|---|---|---|---|---|---|
| 7 | 2 | $[(C_4H_9)_4N]BF_4$ | 7,23 | 1 | 123 | $9{,}7 \times 10^{-5}$ |
| 8 | 2 | $[(C_4H_9)_4N]PF_6$ | 6,66 | 1 | 85 | $3{,}4 \times 10^{-4}$ |
| 9 | 2 | $[(C_4H_9)_4N]ClO_4$ | 7,16 | 1 | 162 | $8{,}3 \times 10^{-4}$ |
| 10 | 3 | $[(C_4H_9)_4N]ClO_4$ | 7,00 | 1 | 75 | $4{,}6 \times 10^{-4}$ |
| 11 | 4 | $[(C_4H_9)_4N]ClO_4$ | 7,90 | 1 | 21 | $1{,}6 \times 10^{-4}$ |
| 12 | 5 | $[(C_4H_9)_4N]ClO_4$ | 5,75 | 0,5 | 14 | $1{,}7 \times 10^{-6}$ |
| 13 | 6 | $[(C_4H_9)_4N]ClO_4$ | 9,23 | 1 | 28 | $2{,}5 \times 10^{-5}$ |

Beispiel 14: Herstellung eines elektrisch leitfähigen Polymeren durch anodische Oxidation einer mit einem Polysiloxanfilm vorbeschichteten Elektrode

2 g des Polysiloxans aus Beispiel 2 werden in 20 ml Methylenchlorid gelöst. Mit dieser Lösung wird durch Spincoating (je 30 sec. bei 900 und 3000 U/min) auf einer Platinelektrode (50x20x1 mm) ein ca. 1 μ dicker Polymerfilm erzeugt. Die beidseitig beschichtete Elektrode wird nun zusammen mit einer unbeschichteten in eine Elektrolytlösung getaucht und als Anode geschaltet. Die Elektrolytlösung enthält 0,02 Mol $[(C_4H_9)_4N]PF_6$ in 200 ml trockenem Propylencarbonat. Nach 30 minütiger Argonspülung wird der Strom (Spannung 5 V, Stromdichte 0,1 $mA/cm^2$) eingeschaltet. Die polymerbeschichtete Anode färbt sich sofort dunkelgrün. Nach einer Elektrolysedauer von 1 h wird der Strom abgeschaltet und die beschichtete Elektrode in 100 ml trockenem Propylencarbonat gewaschen. Anschliessend wird im Hochvakuum bei 80°C getrocknet. Es wird ein schwarzgrüner Film erhalten, der unschmelzbar und unlöslich in den herkömmlichen Lösungsmitteln ist. Die spezif. Leitfähigkeit $\sigma$ beträgt $4.7 \times 10^{-9}$ S $cm^{-1}$.

Beispiel 15: Herstellung einer elektrochromen Anzeige

Zunächst werden zwei Elektrolytlösungen angesetzt. Lösung 1 enthält 1 mmol $[(C_4H_9)_4N]ClO_4$ und 0,5 mmol des Polymeren aus Beispiel 2 in 10 ml trockenem Methylenchlorid. Lösung 2 enthält 1 mmol $[(C_4H_9)_4N]ClO_4$ in 10 ml trockenem Methylenchlorid. Lösung 1 wird in eine Testzelle gefüllt, die aus einem Teflonrahmen (45x40x10 mm) mit einer Wandstärke von 5 mm und zwei ITO-beschichteten Glasscheiben (50x40x1 mm) als transparente Seitenwände besteht (ITO: Indium-Zinnoxid). Die Lösung wird 30 min mit Argon gespült. Dann wird bei 4,3 V elektrolysiert. An der Anode bildet sich ein grüner Film mit $\lambda_{max}$ = 825 nm. Nach einer Minute wird eine optische Dichte $OD_{800}$ (bei $\lambda$ = 800 nm) von 2 erreicht. Nun wird der Strom abgeschaltet und Lösung 1 gegen Lösung 2 ausgetauscht. Die Lösung wird wieder 30 min mit Argon gespült. Danach wird umgepolt und eine Spannung U = 2,0 V angelegt. Der Film entfärbt sich. Wenn $OD_{800}$ auf 0,1 abgesunken ist, wird wieder umgepolt und eine Spannung U = 3,0 V angelegt. Der Film färbt sich wieder grün. Lade- und Entladevorgänge sind gut reversibel.

Beispiel 16:

Es wird wie in Beispiel 15 verfahren. In Abänderung wird der Film bei U = 2,0 V entladen und bei U = 4,5 V aufgeladen. Beim Aufladen färbt sich der Film blau ($\lambda_{max}$ = 700 nm). Lade- und Entladevorgänge sind gut reversibel.

Beispiel 17:

Es wird wie in Beispiel 15 verfahren. Anstelle des Polymeren aus Beispiel 2 wird das Polymere aus Beispiel 3 verwendet. Wieder wird ein im geladenen Zustand grüner ($\lambda_{max}$ = 825 nm) und im entladenen Zustand farbloser Film erhalten. Lade- und Entladevorgänge sind gut reversibel.

Beispiel 18:

1 g des Polymeren aus Beispiel 2 wird in 10 ml Methylenchlorid gelöst. Mit dieser Lösung wird durch Spincoating (je 30 sec bei 1500 U/min und 3000 U/min) auf einer ITO-Glasscheibe (50x40x1 mm) ein ca. 0,1 μ dicker Polymerfilm erzeugt. Die Polymerbeschichtung erfolgt auf der ITO-beschichteten Seite der Glasscheibe. Die Glasscheibe wird nun in die Testzelle eingebaut. Die Testzelle wird mit 10 ml einer 0,1 molaren Lösung von $[(C_4H_9)_4N]ClO_4$ in Propylencarbonat gefüllt und 30 min mit Argon gespült. Danach wird elektrolysiert, wobei die polymerbeschichtete ITO-Glasscheibe als Anode geschaltet ist (U = 4,0 V). Der Polymerfilm färbt sich rasch grün ($\lambda_{max}$ = 825 nm). Beim Erreichen von $OD_{800}$ = 2 wird umgepolt und mit U = 1.0 V weiter elektrolysiert. Der Film entfärbt sich wieder. Lade- und Entladevorgänge sind gut reversibel.

**Patentansprüche**

1. Elektrisch leitfähige Polymere, erhältlich durch anodische Oxidation von Ausgangspolymeren aus 5-100 Mol% an wiederkehrenden Struktureinheiten der Formel I und 95-0 Mol% an wiederkehrenden Struktureinheiten der Formel II

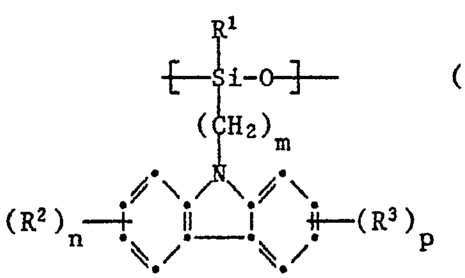 (I), 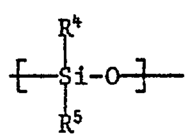 (II),

worin $R^1$ und $R^4$ unabhängig voneinander $C_1$-$C_4$-Alkyl, $C_1$-$C_4$-Alkoxy, Phenyl oder Phenoxy sind, $R^2$ und

$R^3$ unabhängig voneinander $C_1$-$C_4$-Alkyl, $C_1$-$C_4$-Alkoxy, Halogen, Cyan oder Nitro bedeuten, $R^5$ $C_1$-$C_{18}$-Alkyl, das gegebenenfalls durch eine oder zwei Hydroxygruppen substituiert sein kann, Phenyl oder Hydroxyl ist,
m eine ganze Zahl von 3-11 ist und n und p unabhängig voneinander ganze Zahlen von 0 bis 2 sind.

2. Polymere gemäss Anspruch 1, erhältlich durch anodische Oxidation von Ausgangspolymeren bestehend im wesentlichen aus wiederkehrenden Struktureinheiten der Formel I.

3. Polymere gemäss Anspruch 1, erhältlich durch anodische Oxidation von Ausgangscopolymeren aus 10-95 Mol% der wiederkehrenden Struktureinheiten der Formel I und 90-5 Mol% an wiederkehrenden Struktureinheiten der Formel II.

4. Polymere gemäss Anspruch 1, erhältlich durch anodische Oxidation von Ausgangscopolymeren aus 50-85 Mol% der wiederkehrenden Struktureinheiten der Formel I und 50-15 Mol% an wiederkehrenden Struktureinheiten der Formel II.

5. Polymere gemäss Anspruch 1, woring $R^1$ und $R^4$ unabhängig voneinander Methyl oder Phenyl sind, $R^5$ Methyl, Ethyl oder Hydroxyl bedeutet,
m eine ganze Zahl von 3-6 ist und n und p 0 sind.

6. Polymere gemäss Anspruch 3, worin $R^1$ und $R^4$ Methyl sind, $R^5$ Hydroxyl oder Methyl bedeutet,
m 3 ist und n und p 0 sind.

7. Copolymere aus 10 - 95 Mol % der wiederkehrenden Struktureinheiten der Formel I und 90 - 5 Mol% an wiederkehrenden Struktureinheiten der Formel II gemäss Anspruch 1.

8. Verfahren zur Herstellung von elektrisch leitfähigen Polymeren gemäss Anspruch 1 umfassend die Schritte

i) Lösen eines Ausgangspolymeren aus wiederkehrenden Struktureinheiten der Formel I und gegebenenfalls II in einem Elektrolyten enthaltend ein gelöstes Leitsalz und

ii) elektrochemisches Abscheiden besagten leitfähigen Polymers auf der Anode.

9. Verfahren zur Herstellung von elektrisch leitfähigen Polymeren gemäss Anspruch 1 umfassend die Schritte

i) Beschichten einer Elektrode mit einem Film aus einem Ausgangspolymeren aus wiederkehrenden Struktureinheiten der Formel I und gegebenenfalls II und

ii) anodische Oxidation besagter Schicht in einer Elektrolytlösung enthaltend ein gelöstes Leitsalz.

10. Verwendung der elektrisch leitfähigen Polymeren gemäss Anspruch 1 als elektrochrome Anzeigeelemente, als positives Elektrodenmaterial oder als leitende Folien.